# EUROPEAN PATENT APPLICATION

(11) **EP 3 647 972 A1**
(43) Date of publication of application: **06.05.2020**
(21) Application number: 18203853.9
(22) Date of filing: 31.10.2018
(51) Int. Cl.: G06F 17/50

(54) **A METHOD OF TRAINING A CONVOLUTIONAL NEURAL NETWORK TO CARRY OUT SIMULATION OF A PHYSCIAL PRODUCT, A CORRESPONDING METHOD OF CARRYING OUT SIMULATION OF A PHYSICAL PRODUCT AND A CONVOLUTIONAL NEURAL NETWORK**

(71) Applicant: FUJITSU LIMITED, Kanagawa 211-8588 (JP)
(72) Inventor: GEORGESCU, Serban, London, Greater London W13 8NH (GB)
(74) Representative: Haseltine Lake Kempner LLP

(57) **Abstract**

A computer-implemented method of training a Convolutional Neural Network, CNN, to carry out simulation of a physical product in the form of an electronic or electrical product, wherein the simulation result is a distribution of a parameter across geometry of a simulation volume, the method comprising: constructing a neural network architecture with an input layer including: a geometry channel to input geometry of the simulation volume; the geometry divided into one or more solid regions of the product and one or more fluid regions of surrounding fluid; and a property channel to input a volumetric property of each solid region and each fluid region as a property field; and training the neural network by inputting training examples in the form of geometry channel inputs, property channel inputs and the resultant outputs of a numerical solver carrying out simulation.

## Description

Embodiments of the present invention relate to designing and training a neural network for the purpose of learning to approximate the results of a physical simulation.

Physical simulation such as structural analysis, fluid dynamics and electromagnetics is central to Computer Aided Engineering (CAE). Performing such simulations is key to modern product design. Unfortunately, due to the long computing time required to carry out simulation using numerical techniques, simulations are frequently used as a post-design verification tool rather than an integral part of the design process. The advent of high performance computing, HPC, and cloud computing has enabled practitioners to perform many complex simulations in the same amount of time a single simulation used to take, while reducing the associated hardware and software costs. However, the time taken to perform one single simulation has not changed significantly.

On the back of the recent advancement in Artificial Intelligence, Al, there have been recent efforts in experimenting with artificial neural networks (also referred to as neural networks, or simply networks) to predict the outcome of physical-based processes, in particular fluid flow. Numerical simulations are regarded as the most effective way to understand complex physical phenomena. Traditional numerical simulation usually requires extensive computing resources, whereas neural networks may provide a less accurate, but much faster and more efficient solution. This may be achieved by feeding steady state simulation data into deep neural networks so they may learn and predict field distribution over arbitrarily shaped objects.

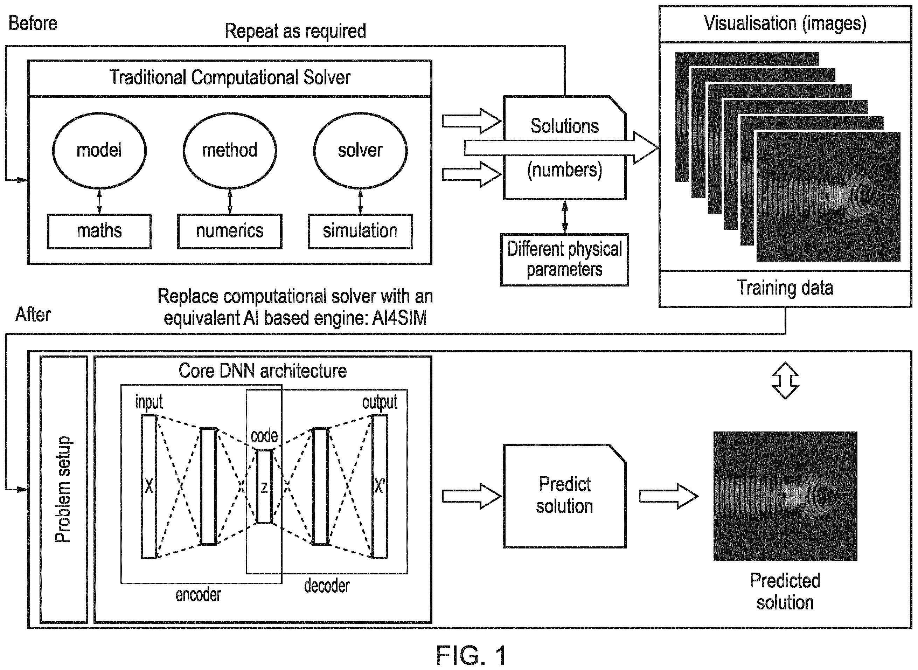

The relation between traditional (numerical) simulation and Al-based simulation of fluid flow in the prior art is shown in Figure 1. A traditional fluid-flow solver performs simulations based on a mathematical formulation (a set of equations) that are solved using numerical methods. This solver is run for a large number of times in order to generate a database of input - output sets, which become the training data for the Al-based solver. The Al-based solver uses a deep neural network (DNN) to learn a mapping between the inputs to the solver and the output results.

Figure 1 includes a representation of a prior art solver in the "Before" section. Here, a mathematical model of a physical environment is input, and using numerical methods are used in a "solver". The term "numerics" stands for a numerical method of solving the equations arising from the mathematical formulation in the solver. The methods used most often are Finite Element (FEM), Finite Volume (FVM), Finite Difference (FDM), Finite Difference Time Domain (FDTD). These numerical methods are implemented in code and create the solver. The results (solutions) in terms of numbers are provided for different physical parameters, such as different temperatures and physical layouts and properties. Such simulation results may be viewed by the user, for example, on a GUI as images of the input geometry, coloured according to field strength, temperature or other modelled parameter. The traditional simulation input and results are used as training data for the Al method.

In the new use of Al, instead of using the conventional and often very time-consuming conventional solver (Before) to simulate fluid flow on each occasion, the user performs inference using the previously trained neural network (After) to give a predicted solution which is very close to the actual numerical solution. This gains many orders of magnitude of speed (from hours to milliseconds) while sacrificing some (ideally very small) amount of accuracy.

Deep neural networks such as those proposed in the prior art may be sufficient for some applications, such as shape optimisation for improved fluid flow. However they lack general applicability.

According to one aspect of the present invention there is provided a computer-implemented method of training a Convolutional Neural Network, CNN, to carry out simulation of a physical product in the form of an electronic or electrical product, wherein the simulation result is a distribution of a parameter across geometry of a simulation volume. The method comprises constructing a neural network architecture with an input layer including: a geometry channel to input geometry of the simulation volume; the geometry divided into one or more solid regions of the product and one or more fluid regions of surrounding fluid; and a property channel to input a volumetric property of each region (that is, each solid region and each fluid region) as a property field; and training the neural network by inputting training data in the form of training examples with geometry channel inputs, property channel inputs and the resultant outputs of a numerical solver carrying out simulation. The inputs and corresponding outputs in each training example for a training set for the CNN.

Embodiments of the invention add one or more property fields to the input of the neural network previously used for fluid flow alone. The addition simply and effectively uses additional channels. This allows more general use of the Al methodology, by additional input of more technical parameters such as material properties or power source. The output parameter is a technical parameter which is intrinsically linked to the technical functioning of the object, such as a heat or field distribution brought about by use of electrical or electronic equipment. For example, for the particular case of Conjugate Heat Transfer, CHT, a type of simulation used for simulating heat transfer between solids (e.g. computers such as personal computers, laptops or servers, computer parts such as Printed Circuit Boards, PCBs, or integrated circuits, ICs), and fluids (air and/or water), three material properties (density, thermal conductivity and specific heat capacity) together with power dissipation may need to be provided as appropriate throughout the simulation domain. The output may be temperature distribution.

The training data from the previous numerical simulation is of the same type of simulation (such as CHT etc.) now transferred to the CNN (necessarily so, since the CNN is built on this data) and of the same type of product (with product types such as a personal computer, laptop or server or server room, a smart device, a PCB or an IC).

A volumetric property of a region is defined as a scalar physical property specific to the region. In general, a volumetric property corresponds to physical property of the object represented by the region, for example its density or specific heat. However, a volumetric property may also represents another property, such as the power dissipated by the object.

A volumetric property may be viewed as an allocation of a value (a scalar) to each point in space across a region to form a property field.

The method may further comprise adding to the input layer an inverse property channel for the volumetric property, wherein the inverse property channel inputs a field with the same structure as a structure of the volumetric property but replaces the value v at each location in the structure with its inverse 1/v to form an inverse property field.

The inventor has come to the realisation that since neural networks in general and CNNs in particular have great difficulty in learning inverse relations between input parameters and results, it would be advantageous to input an inverse property channel as well as a property channel. If there are a plurality of property channels, an inverse property channel may be input for some or all of the properties.

For example, a property channel may be added for each of a plurality of volumetric properties, preferably including one or more of material properties, properties related to power sources or properties related to external fields, such as one or more of density, specific heat, thermal conductivity or power generation/dissipation. An inverse property channel may be created for one or more, or even each of these channels.

For a volumetric property that is scalable (such as power dissipation or power generation), a property field is calculated for each region by dividing the volumetric property by the volume of the region.

For a volumetric property that is vectorial, individual spatial components are represented as independent volumetric properties, such as in three independent axes.

For efficient calculations, the property field (or all of the property fields) may be normalised by dividing all values in the field by the maximum value of the (respective) field.

Each region may be structured into cells (which may be seen as points in space). The geometry channel input may be converted to a format of a fixed size for input. For example, the input geometry may be converted into a format which represents the spatial relationship between a cell and a boundary of the region in which the cell is included

The skilled person will appreciate that the simulation is applicable in 2D, as well as in 3D. The simulation may be of heat transfer between a 2D or 3D object that generates heat (for example in at least one region) and a fluid surrounding the object, and in this case the simulation result may be an overall heat distribution.

The simulation (and specifically the numerical solver) may use Computational Fluid Dynamics, CFD simulation, such as a Conjugate Heat transfer, CHT, simulation. The most simple type of CFD only simulates the fluid domain and treats the solids as boundaries (e.g., in the case of flow around a car). Conjugate Heat Transfer considers the solids as well besides the fluid domain. Many other methods may alternatively be used, such as Computational Electromagnetics or Structural Analysis.

According to a further aspect of the invention, there is provided a method of carrying out a simulation of a physical product in a CNN, Convolutional Neural Network, the method comprising: running the simulation of the physical product in the CNN using a model produced in the CNN by the training method as set out above. This method of carrying out a simulation may also be viewed as an approximate simulation, because it uses Al modelling techniques rather than numerical solvers. Input of values for the same parameters (or at least some of the same parameters) as used in the training and input of a geometry of the same product type as used in the training will allow output of results such as a temperature distribution.

Such a method may further comprise generating models of a physical product to use in the numerical solver by inputting parameters for product generation in terms of one or more of: number of components in the product; maximum power of a component; ratio of active to passive components and maximum; and minimum physical component size to vary for each model; and generating models from the parameters in a format suitable for the numerical solver.

According to a still further aspect of the invention, there is provided a Convolutional Neural Network, CNN, to carry out simulation of a physical product in the form of an electronic or electrical product, wherein the simulation result is a distribution of a parameter across geometry of a simulation volume, the CNN comprising: a neural network architecture with: an input layer having a geometry channel for geometry of the simulation volume; the geometry divided into one or more solid regions of the product and one or more fluid regions of surrounding fluid; and a property channel in the input layer to input a volumetric property of each solid region and each fluid region as a property field; hidden encoding and decoding layers; and an output layer to output a distribution of a parameter across the geometry of the simulation volume.

The CNN may be stored on a computing device (potentially as a cluster of computing devices) comprising memory to store the layer weights and input data and computational units (used as neurons) to compute functions applied to the layer weights and input data. The model is formed by the weights and functions. The input data (from the previous layer or the original input data) allows use of the CNN to predict the parameter distribution for the specific inputs.

Hence according to a yet further aspect of the invention there is provided a computing device comprising memory and computational units arranged to provide a Convolutional Neural Network, CNN, to carry out simulation of a physical product in the form of an electronic or electrical product, wherein the simulation result is a distribution of a parameter across geometry of a simulation volume, wherein the memory is configured to store weights of layers forming the CNN and data input to the layers; and the computational units are configured to compute functions applied to the layer weights and input data in the CNN, the CNN comprising:
a neural network architecture with: an input layer having a geometry channel for geometry of the simulation volume; the geometry divided into one or more solid regions of the product and one or more fluid regions of surrounding fluid; and a property channel in the input layer to input a volumetric property of each solid region and each fluid region as a property field; hidden encoding and decoding layers; and an output layer to output a distribution of a parameter across the geometry of the simulation volume.

An apparatus or computer program according to preferred embodiments of the present invention may comprise any combination of the method aspects. Methods or computer programs according to further embodiments may be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the apparatus according to any of the preceding apparatus definitions or any combination thereof.

According to a further aspect there is provided a program which when loaded onto the at least one computer configures the at least one computer to carry out the method steps according to any of the preceding method definitions or any combination thereof.

In general the computer/computing device may comprise the elements listed as being configured or arranged to provide the functions defined. For example this computer may include memory, processing, and a network interface.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (Field Programmable Gate Array) or an ASIC (Application-Specific Integrated Circuit) or a GPU (Graphics Processing Unit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results.

Elements of the invention have been described using the terms "processor" and "memory". The skilled person will appreciate that such functional terms and their equivalents may refer to parts of the system that are spatially separate but combine to serve the function defined. Equally, the same physical parts of the system may provide two or more of the functions defined.

For example, separately defined means may be implemented using the same memory and/or processor as appropriate.

Preferred features of the present invention will now be described, purely by way of example, with references to the accompanying drawings, in which:-
Figure 1 (already discussed) shows the relation between traditional (numerical) simulation and Al-based simulation of fluid flow in the prior art;
Figure 2 is a flowchart of invention embodiments providing a method of training a CNN;
Figure 3 is a diagrammatic overview illustration of a DNN according to an invention embodiment;
Figure 4a shows a 2D simulation domain with multiple regions;
Figure 4b shows cells in Region 1 of the 2D simulation domain;
Figure 5 is a flow chart of a process for converting a volumetric property into a property field;
Figure 6 is a diagrammatic overview of a DNN structure according to an invention embodiment;
Figure 7 is a flow chart of a process of creating a complete deep network input layer;
Figure 8 is a diagrammatic version of a 5-layer U-Net which may be used in invention embodiments;
Figure 9 is a schematic summary of the difference between the previous technology and the advancements of invention embodiments;
Figure 10 is a diagrammatic overview of a DNN structure according to a specific invention embodiment;
Figure 11 shows some examples of PCBs resulting from randomly generated PCBs;
Figure 12 is a diagrammatic example of simulation settings for a PCB model;
Figure 13 outlines the full process of product generation, numerical simulation of generated products and neural network training;
Figure 14 is a diagram of temperature distribution using an Al simulation and a numerical simulation;
Figure 15 shows two graphs of network error with (right) and without (right) inverse property fields; and
Figure 16 is a diagram of suitable hardware for implementation of invention embodiments.

Invention embodiments provide a new efficient method of designing and training a deep neural network for the purpose of learning to approximate the results of a physical simulation. Computational units in an artificial neural network (ANN) are modelled after neurons in the human brain, the neurons in the ANN being grouped by layers. Typically there is an input layer of neurons, an output layer of neurons, and hidden layers of neurons, for example convolution, pooling, rectified linear units (ReLU), fully connected layers, etc. A Deep Neural Network (DNN) is an ANN with multiple hidden layers of neurons acting as computational units between input and output layers. Each computational unit combines different data inputs, which are weighted, to compute a function, sometimes referred to as an activation function or transfer function. This function could be a linear combination of the weighted inputs, or something more elaborate such as a sigmoid function.

In a Convolutional Neural Network (CNN), a convolutional layer is used for feature extraction. It may be viewed as a set of one or more weighted filters or neurons which slide (or convolve) across an array of input data multiplying the input data by the filter values. These multiplications are then summed at each location of the filter, so the output is likely to be smaller in dimension than the input. The output of a first convolutional layer becomes the input of the next convolutional layer. A Fully Connected or FC layer may be used for feature classification. It takes output data from a previous layer and determines which features belong to a particular class (labelling the output data).

When training an ANN, the outputs of the network are compared with a desired output using a loss function and an error value is calculated for each neuron in the output layer. The error values are then back-propagated until each neuron in the network has an error value. These error values are used to calculate the gradients of the loss function with respect to the weights in the network, the gradients in turn being used to update the weights in order to minimise the loss function.

DNNs offer the potential to achieve significant advancements in areas such as speech and image recognition, with accuracy performance exceeding those recorded by other sophisticated methods in Machine Learning. The training process of DNNs is a computationally intensive task, which typically requires large computational resources, including memory (RAM) and training (execution) time. To address the long training times, several efforts have focused on improvements to speed up deep learning algorithms while exploiting the computational power of both specialised and mainstream hardware accelerators, including, for example, Graphics Processing Units, GPUs, Intel® Xeon PhiTM, FPGA, ASICs, etc.

One important benefit of the embodiments is to allow a deep-network based CNN solver to be useful for real-world problems, where being able to incorporate various physical properties is a must.

Simulations requiring input multiple properties are an advantageous application of invention embodiments. The prior art can, for example, perform shape optimisation (e.g., optimize shape of a side-mirror to reduce the drag on a car). However the same prior art would not provide results for the simulation of electronic products, since this may involve multiple material properties, power sources and so on. Further applications outside of manufacturing are "smart" devices that need to adapt to their environment in real time. Traditional simulation takes too long to complete, so it cannot be used in such a system, however an Al-based simulation, that takes less than 1 second and in many cases much less than that, may be useful. In general, if the situation requires that the answer be returned in almost real time, then this technology is very useful. If the only purpose is to perform shape optimisation (e.g., optimize the shape of the side-mirror to reduce the drag on the car) then that can be done with prior art. One application is the simulation of electronic products before manufacture since this involves multiple material properties and power sources (in the form of active components). Other applications outside of manufacturing involve "smart" devices that need to adapt to their environment in real time. Traditional simulation takes too long to complete so it cannot be used in such a system, however an Al-based simulation, that takes less than 1 second and in many cases much less than that, can be useful. In general, if the situation requires that the answer be returned quickly, perhaps in almost real time, then invention embodiment are particularly useful.

In such situations, invention embodiments add essential property information to the neural network in a way which is:
- Efficient from an accuracy point view (the results are very similar to the numerical solver), meaning that it enables the network to learn the required mapping with very good accuracy;
- Efficient from an execution point of view, meaning that it maps well on the underlying hardware (in general, it is more computationally efficient to compute the inverses as a preprocessing step rather than compute them as part of the network execution; on almost all modern architectures, the division operation is an order of magnitude more expensive than addition and multiplication, hence an implementation that does not require division is beneficial); and
- Efficient from an integration point of view, meaning that it can be easily derived from the physical characteristics of the problem. The input to the network (geometry and physical property layers) can be very easily computed from the information available to the physical solver. Thus embodiments are able to achieve very good accuracy working solely on the information that is available straight from the solver, without any other type of "feature engineering" required.

### Overview

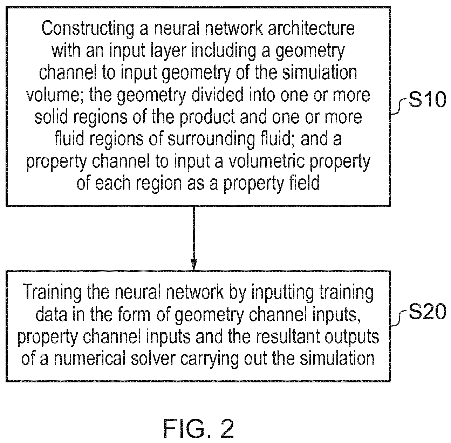

Figure 2 is a flowchart of invention embodiments providing a method of training a CNN (which is in the form of a DNN). In step S10 an ANN architecture is constructed. The ANN architecture has an input layer including a geometry channel to input geometry of the simulation volume. The geometry is divided into one or more solid regions of the product and one or more fluid regions of surrounding fluid; and a property channel to input a volumetric property of each region as a property field.

In step S20, the neural network is trained, by inputting training data in the form of geometry channel inputs, property channel inputs and the resultant outputs of a numerical solver carrying out the simulation.

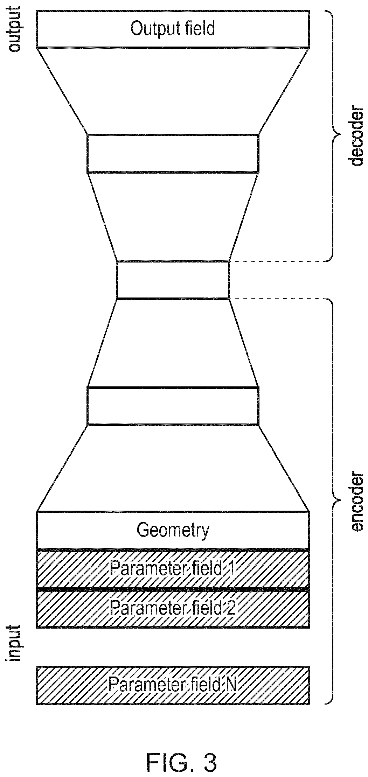

Figure 3 is a diagrammatic overview illustration of A DNN according to an invention embodiment.

The geometry input (before conversion as explained below) reads any type of CAD file (e.g., STEP and Boundary Representation BREP) and STL (Standard Triangle Language or Standard Tessellation Language) files) in the input section.

Invention embodiments add one or more property fields to the input of the neural network as additional channels, shown as Parameter field 1, Parameter field 2 and Parameter field N. The network has one input layer: the first layer in the network. This has multiple channels. The concept of channels is used in CNNs such as AlexNet for classifying images. The input layer contains the image data and consists of 3 channels (R, G and B in AlexNet), which correspond to physical properties that need to be supported by the network. The term "field" is used in the sense of an input that varies in space (e.g. between regions and within a single region), which therefore makes it volumetric. Invention embodiment use a "scalar field", associating a value (a scalar) to each point in the space in the case of the 3D simulation (or on the plane for a 2D simulation). For example, a "density field" may contain the density value at each point in the simulation domain. So, if the input resolution is 64x64x16, the field will have 64x64x16 density values. In this document the variation in time is not considered, and steady state numerical simulation results are used.

The addition of these input channels is the primary modifications made to the prior art network architecture. One important contribution of invention embodiments is the way in which these additional input channels (denoted by "Parameter field 1 ... N") are created.

The existing network architecture has to be able to learn the relations in the simulation. One example of such an architecture is the U-Net architecture presented in U-Net: Convolutional Networks for Biomedical Image Segmentation, Medical Image Computing and Computer-Assisted Intervention - MICCAI 2015, pp 234-241. Architectures similar to those in AlexNet, Googlenet, ResNet etc. may also be considered.

The architecture is shown divided into a generally reducing encoder and a generally expanding decoder section. The network has an "auto-encoder" architecture. In this type of architecture, the resolution of the input is gradually reduced (in a number of steps where usually at each step the resolution is halved) up to the thinnest point, which is often called the "bottleneck". Here, the information is the most compressed. Then, from there onwards, the resolution is gradually increased (symmetrically with the encoding) until it reaches the same resolution as the input. The compression stage is usually called "encoding", because the geometry is encoded into a lower dimensional representation called the "latent space" (the bottleneck). Then, the latent space information is "decoded" into the output.

How many layers and exactly what they contain may vary, but in general there is a mix of convolutional layers, pooling layers and deconvolution layers. While it is possible to use fully connected layers, invention embodiments do not currently use any fully connected layer.

### Detailed Description of Specific Invention Embodiments

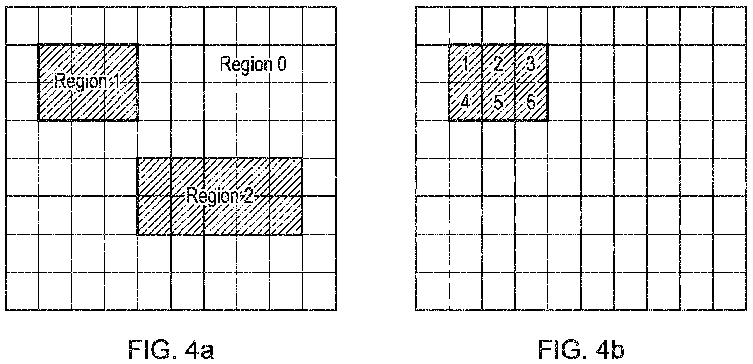

Consider the 2D simulation domain shown in Figure 4a. A region is defined as a subset of the domain contained inside a geometrical boundary. The domain shown in Figure 4a has three regions: one fluid region (Region 0) and two solid regions (Region 1, 2). In the specific case of a Conjugate Heat Transfer (CHT) simulation, a domain may contain one or more fluid regions and zero or more solid regions. Note that while in the current example, for simplicity, a 2D domain and regions are described, but invention embodiments may be identically applied both in 2D and 3D. For 2D cases, the regions are 2D and the term "volumetric" used herein may be replaced with "areal".

A region is composed from one or more cells. For example, Region 1 from Figure 4a is composed of 6 cells numbered from 1 to 6, as shown in Figure 4b. Further to this, the volume of a region is defined as the total number of cells belonging to a region.

A volumetric property of a region is defined as a physical property specific to the region. In general, a volumetric property corresponds to a physical property of the object represented by the region, for example its density or specific heat. However, a volumetric property may also represent something else, such as the power dissipated by the object. For properties that are vectorial in nature the individual components (components in the X, Y and Z axes) are defined as independent volumetric properties.

Often, the input is an assembly model of components making up an object to be simulated and each component has its own material properties, power dissipation etc. In this case, there is at least one fluid region, the one region per assembly component.

There may be two fluid regions if the object to be simulated has an internal void. Additionally or alternatively, there may be multiple fluids in the same simulation (e.g. a multi-phase flow with air and water) in which case there are multiple fluid regions even without voids.

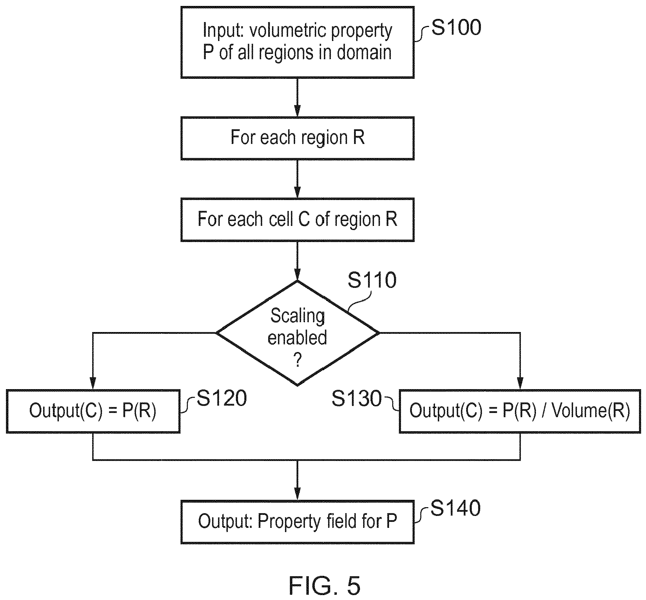

In order to provide it to the network, each volumetric property is converted to a property field following the process shown in Figure 5. For each region, the value of the property is copied into all the cells within the region. In the simplest case, when scaling is not enabled (S110) the input S100 of a property is followed by a step of adding the property P into each cell C of each region R (S120). If scaling is enabled in S110, then the value for each cell is divided by the volume to give the output shown in S130. That is, in some cases scaling is used (for example with power dissipation), the values assigned to cells in the region being divided by the total volume of the region. The final property fields are output at step S140.

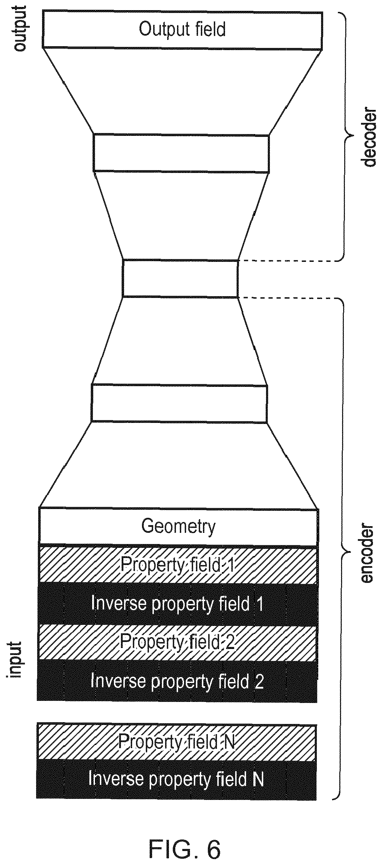

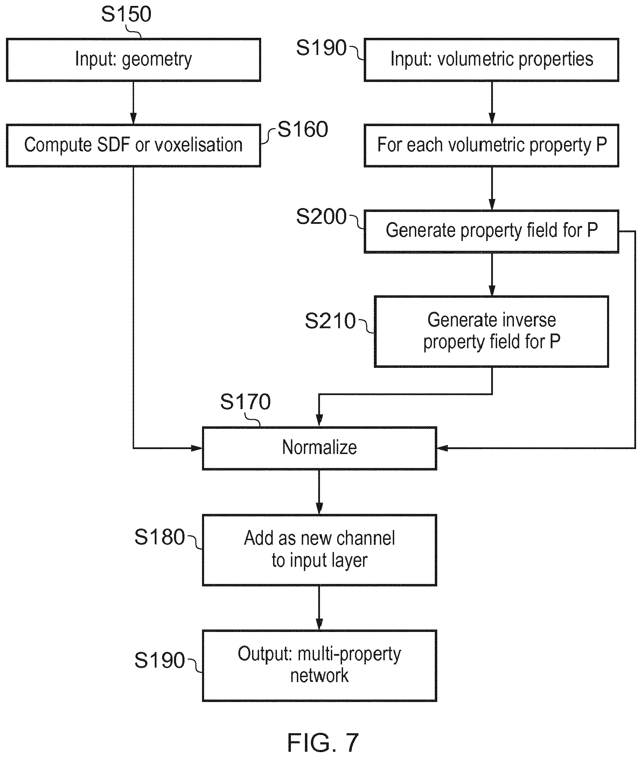

The complete process in one embodiment for creating the network input layer is shown in Figure 7, resulting in a DNN structure as shown in Figure 6. For an overview of the construction of Figure 6, the reader is referred to the description of Figure 3.

The input to the network in step S150 needs to be of a fixed size in terms of number of cells, for example 64x64x16. Because of this, the CAD geometry must be mapped into these cells. Hence, in step S160 the input geometry is either converted to a Signed Distance Function (SDF) (where each cell contains the (oriented) distance from the centre of the cell to the closest geometrical boundary) or it is voxelized (where each cell contains 1 if inside a solid region or on its boundary and 0 otherwise). Voxelization is a simpler process, and SDF retains more data, since each cell contains the distance to the closest boundary, hence it carries more information.

In fact, this restriction is not the disadvantage that it might seem. The actual simulations are actually performed on a different, often higher resolution and unstructured mesh. While the Al solver according to invention embodiments effectively uses a much smaller resolution than the physics-based solver, the results are very good.

The generated geometry field (e.g. SDF or voxelized) is then added as a channel of the input layer of the DNN in S170, after optional normalization in S170.

### Inverse Values

The inventor has taken into account the fact that neural networks in general and CNNs such as U-Net in particular have great difficulties in learning inverse relations between input parameters and results. This is because all operations in the layers involve only additions (subtractions) and multiplications but no divisions. Although in theory a sufficiently complex neural network may approximate any function, in practice approximating inverse relationships is very difficult. However, such relationships are very often encountered in physical simulations. For example, in a CHT or other CFD simulation, there is an inverse relationship between the thermal conductivity and the resulting temperature distribution since objects with higher thermal conductivity dissipate heat faster hence cool down faster than objects with lower thermal conductivity.

Following the observation above, one advantageous feature of invention embodiments is the addition of inverse property fields containing the inverse of the property at each location. Here, by the inverse of a property field P is a field with a structure identical with the original property field where the value v at cell C is replaced by its inverse 1/v. By providing the network with both the property and inverse of the property as input, the network may easily learn inverse relationships.

Processing for volumetric properties may take place in parallel with the processing for the geometry field. For example, volumetric properties are input at S190 and for each volumetric property a property field is generated in S200. Each volumetric property is converted into a pair of property field and inverse property field (in S210), both of which are added as channels to the DNN in S180 after option normalisation. This operation continues for all volumetric properties. In S190, the multi-property (neural) network is output. The result of this process is a DNN such as the one shown in Figure 6.

### U-Net structure

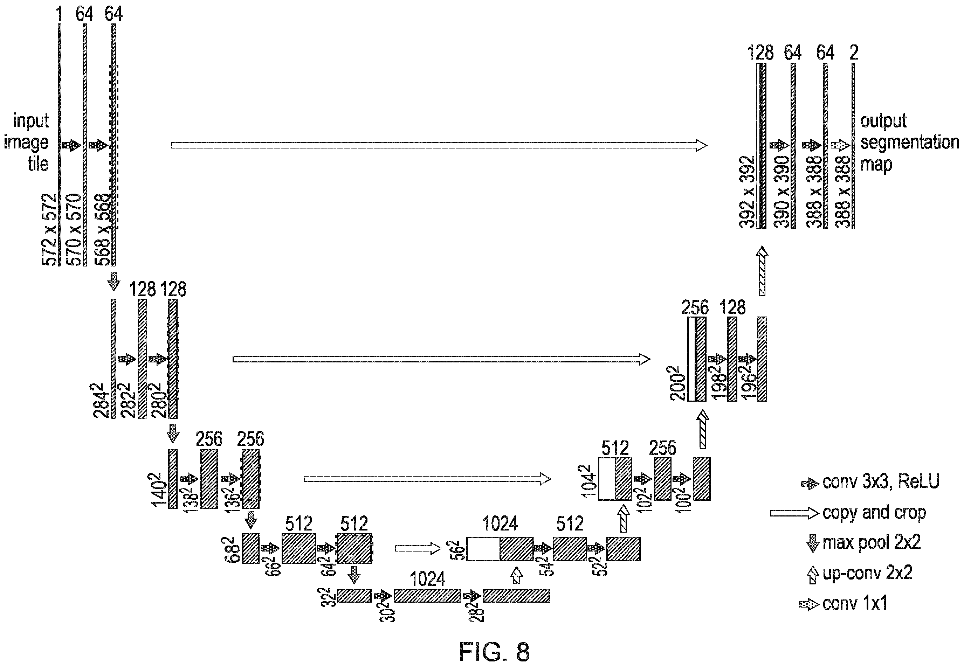

Figure 8 is a diagrammatic version of a 5-layer U-Net used in invention embodiments. In general terms, a CNN is used with a reduction of the resolution 5-6 times, from an initial fine grid to a reasonably coarse grid and then the reverse. At each stage, multiple layers are used, so the DNN may be at least 50 layers deep.

The input is shown as vertical bars on the left and output as vertical bars on the right of the diagram, as well as the vertical bars of interim data. Arrows represent processing in the layers. For example, all the horizontal arrows but the last horizontal arrow represent convolutional layers, followed by a ReLU layer. The final horizontal arrow represents a single convolutional layer. The dimensions shown for the data (and the vertical bar length in the diagram) represent the resolution, demonstrating the step-wise resolution reduction and expansion as previously explained, using pooling and up-conv layers (down and up arrows respectively).

The encoding part of the structure extracts high-level approximations of the physical processes at work, since not only the geometry information but also all other physical properties are mixed.

Multiple decoding layers map the abstract representations into the field of results. The "inverse" operation of convolution, known as deconvolution, constructs these multiple stacked decoding layers. Deconvolution layers multiply each input value by a filter for each element, and sum over the resulting output windows. Put more simply, a deconvolution layer (shown as an up-conv arrow) is a convolution layer with the forward and backward passes reversed. This figure shows 5 stages in encoding and decoding (including the input and output).

The following examples relate to a PCB, but the skilled reader will appreciate that exactly the same considerations apply to simulation of a other electrical and electronic products, for example on a larger scale (a server room), a similar scale (a smartphone) or a smaller scale (an IC). Equally, the examples refer to CHT, but the skilled reader will appreciate that the techniques explained are generally applicable to the use of numerical simulation data in training a DNN in Al simulation.

### Comparison with Prior Art

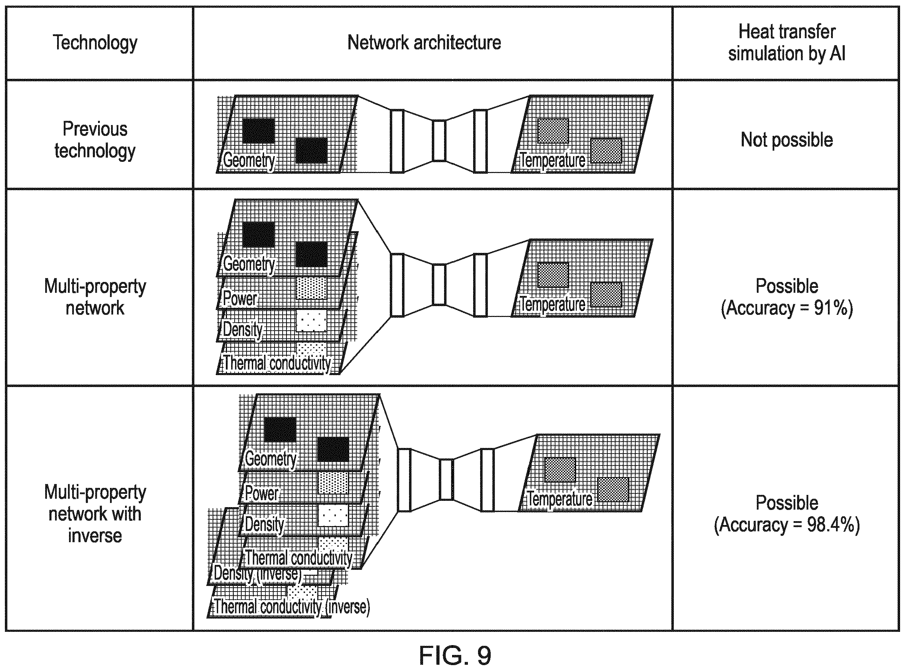

A summary of the difference between the previous technology and the advancements of invention embodiments, together with their impact on a real-world problem (the simulation of heat transfer in a printed circuit board) is shown in Figure 9. In Figure 9, "multi-property network" represents the use of the process of invention embodiments without using the inverse layers while "multi-property network with inverse" represents the complete process from Figures 6 and 7.

The previous architecture takes a geometry input only and could potentially produce a temperature distribution output as shown in the diagram, but cannot simulate heat transfer accurately.

The prior art does not deal with temperature. Even with the assumption that using previous technology, one could somehow map the input shape to an output temperature (the technology might allow for that, by simply replacing the output flow field with an output temperature field), the accuracy would be very low since it would be almost impossible for the network to create the temperature distribution from the geometry alone, without having access to all the material properties and power sources. Hence, for all practical purposes, with prior art technology this simulation would not possible.

The multi-property network including geometry, power dissipation, density and thermal conductivity, but without use of inverse values, may give an accuracy of 91% in comparison to the "ground truth" numerical simulation. Adding inverse channels for density and thermal conductivity produces an accuracy of 98.4%.

### Specific Example

Consider the case of a 3D Conjugate Heat Transfer problem. For this example, the input domain is discretized in 64x64x16 cells in the X, Y and Z directions respectively. The geometry is voxelized and added as a binary channel.

Considering the physics involved, four volumetric properties need to be added to the network:
- Power (in Watts) representing the power generated by the active components considered in the simulation. For this property, the conversion to a property field is carried with the scaling option enabled. In this way, each individual cell of an active objects stores exactly the amount of power it generates and not that of the entire solid.
- Density (kg/m)
- Thermal conductivity (W/(m·K)
- Specific heat capacity (J/K)
All property fields are normalized by dividing all values in the field to the maximum value of the field.

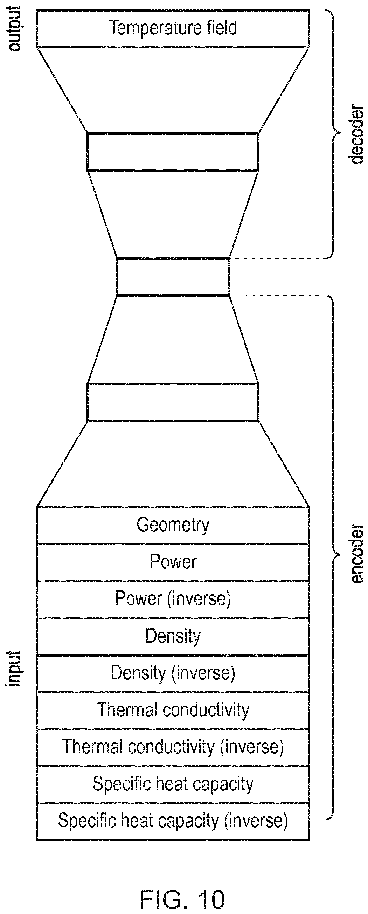

After following the process described for invention embodiments, the network structure as shown in Figure 10, which is drawn following the same conventions as Figures 3 and 6. Here, inverse fields for power, density, thermal conductivity and specific heat capacity are created as additional channels.

Lots of data must be generated in order to train the network. A minimum level of accuracy may be obtained with 500 records, but it is very unlikely it would be very good. This is because the network is very large and with only 500 records it would very likely overfit. Using more than 1000 records, or more than 5000 might produce acceptable accuracy.

In fact, with around 10,000 examples good accuracy is obtained. As it is often impossible to obtain so much real data, synthetic data may be created for this purpose.

So, first around 10,000 random printed circuit boards are generated, where the size of the PCB, placements of the components, size of components, power generation and material properties are randomized. Choices were made as follows:

### Input parameters:

Domain size (e.g. 64x64x16)
Random seed (different seed produces a different model)
Maximum number of components on PCB (e.g. 20)
Maximum power of a component (e.g. 0 to 5W)
Ratio of active to passive components (e.g. 50%)
Minimum and maximum physical sizes of component blocks

When providing a random number generator on a computer, in fact a pseudo-random number generator is used rather than a real one. A pseudo-random number generator starts from an input value called the "seed" and, following a very non-linear process, generates a sequence of numbers that have statistical properties very close to that of real random numbers. Since the generation process is in fact deterministic, for a given seed, the generator will always output the same sequence. In other words, for a given seed, the same 3D model will always be generated. So, to get different models, once needs to provide different seeds. To generate N models, the easiest way is to set the seed to {1,2, ... N} and provide that to the generator.

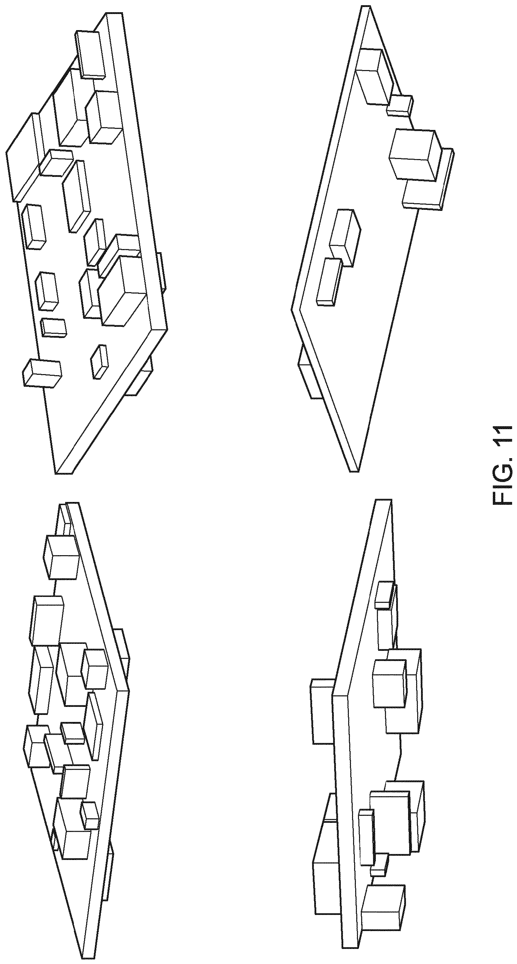

Figure 11 shows some examples of resulting PCBs. These are generated in the format of the physical solver that is needed to generate the data, which in this case is OpenFOAM® (such as v6 and v1806/20 July 2018 and 29 June 2018). Of course, an OpenFOAM® input is more than a shape, many files need to be created, so an appropriate generator was created.

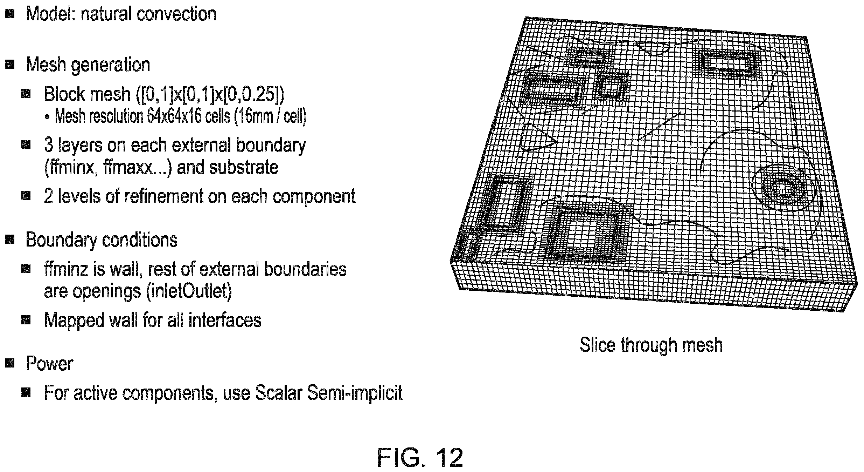

As previously mentioned, when executing the physical solver, there is no restriction to the resolution used as input for the DNN since the solver would not then converge at all. The mesh generated is sufficiently fine to provide an accurate solution (the same as might be used if these data were not used for training but for production). An example of simulation settings for a PCB model generator is explained diagrammatically in Figure 12.

The model used is natural convection. For mesh generation, the coordinates of the bounding box of the domain are [0 to 1] x [0 to 1] x [0 to .25], given in meters, with a resolution of 64X64X16 cells (16mm/cell). There are three layers on each external boundary (ffminx, ffmaxx, ffminy, ffmaxy, ffminz, ffmaxz) and on the substrate. For each component, 2 levels of mesh refinement are used. For boundary conditions, ffminz (the bottom in the vertical direction) is a wall and the rest of the external boundaries are inlet/outlet openings. There is a mapped wall for all interfaces. In OpenFOAM® terminology this means that the interfaces (for example - the outer shell of a component mesh and the part of the outer shell of the fluid mesh that covers the same region) are mapped to one-another to allow heat transfer between them.

To represent power of active components, a scalar semi-implicit modelling is used. OpenFOAM® implementation details for this process are available at (https://www.openfoam.com/documentation/cpp-guide/html/guide-fvoptions-sources-semi-implicit.html).

The models are executed (OpenFOAM®) on a cluster (on 10,000 cores it takes about 1 week to generate all of them). The final results are interpolated from the high-resolution unstructured mesh used in the numerical simulation to the low resolution structured mesh (64x64x16) that the network can take as input.

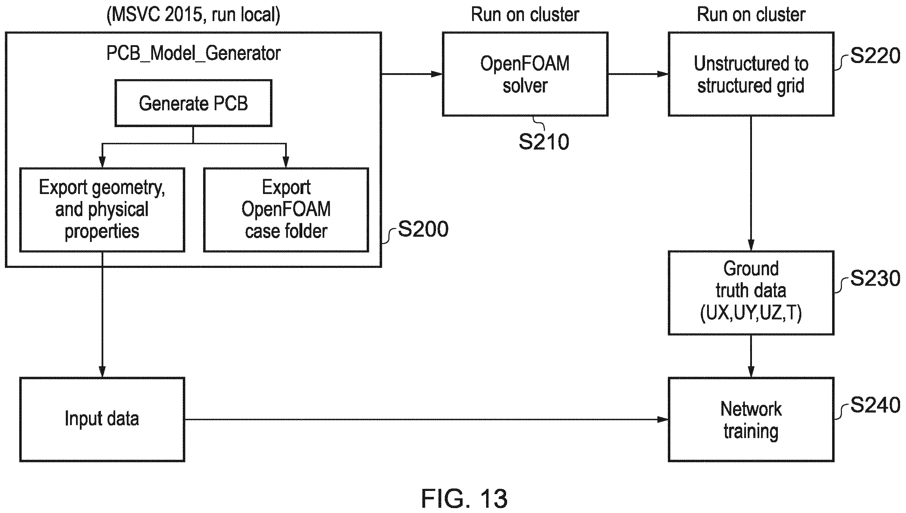

The entire process is outlined in Figure 13. In S200, the PCB models are generated, with their geometry and physical properties being used both as input data for the later network training in S240 and for an OpenFOAM® case folder. In S210 the models are run on the OpenFOAM® solver. In S220 the results are converted to the structured grid for the network training. In S230 the results are used as ground truth data in 3D.

UX, UY, UZ represent the velocity fields in the X, Y and Z direction, while T represents the temperature field. Both versions were compared; prediction of both velocity and temperature and prediction of temperature alone, and the version when temperature alone is predicted had slightly better accuracy.

TensorFlow (such as 1.11.0/September 27, 2018) was used for DNN training and inference and the network architecture was very similar to U-Net. The input layer consists of the 9 channels shown in Figure 10 and the output of 1 channel - the temperature field. 5 levels were used in the encoder and 5 in the decoder.

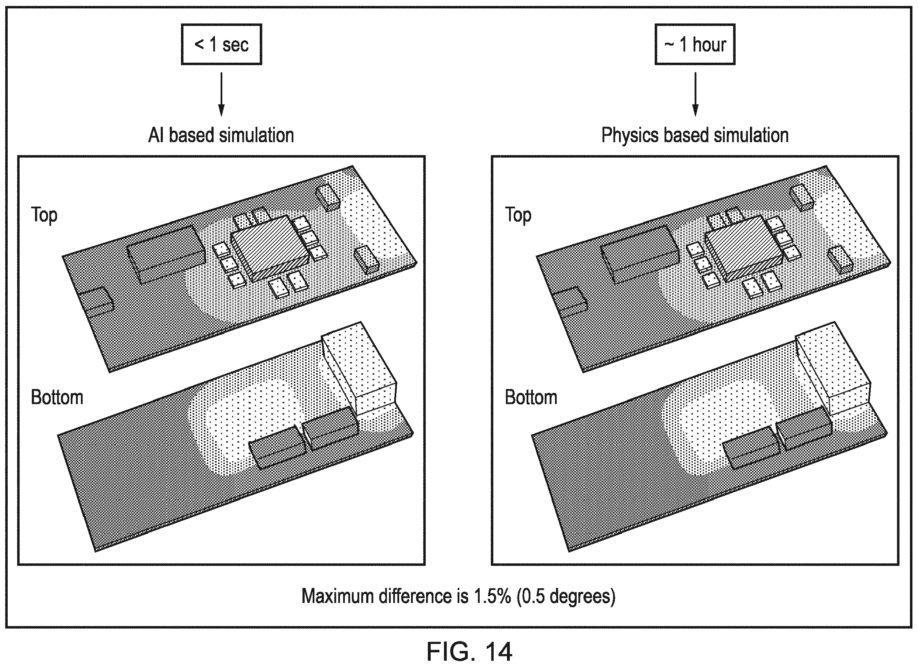

Preferably, the values used for training are not very far from the values used for a test or working phase, however the generalisation works well if the same type of product is used. For example, the geometry used in the example from Figure 14 below is quite different from that of the randomly generated PCBs shown before, however the results are very good, as set out below. Most materials used in production can be known at training time, and it is advantageous to train with as many as possible.

The training takes around 1 day on a TitanX GPU and testing may be carried out on both randomly generated PCB and some hand-crafted ones, such as the one in Figure 14. Figure 14 is a diagram of temperature distribution using the Al simulation according to this example and the numerical simulation (both sides of the PCB). The maximum difference between the temperatures according to the different simulation type at the same position of the PCB is 0.5 degrees centigrade, or 1.5%. The Al simulation takes less than one second and the numerical (physics-based) simulation takes about one hour.

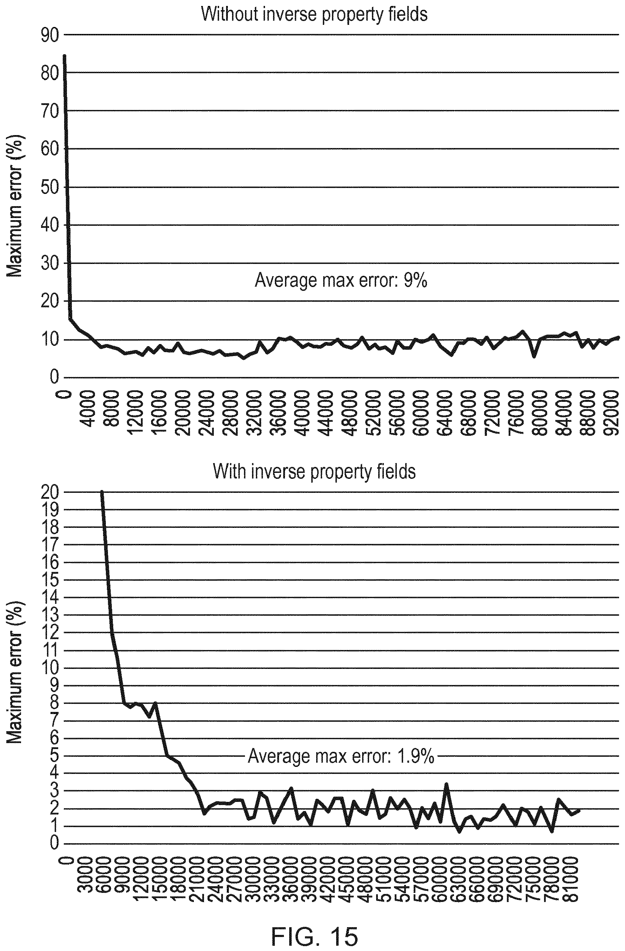

Figure 15 demonstrates the benefits of invention embodiments, by showing the accuracy achieved by the network as created above, while simulating CHT for a one-sided Printed Circuit Board with and without the inverse property fields in Figure 10. Maximum error on the Y axis is plotted against the learning iteration number on the X axis. The error in the test decreases with more training, but after some point it does not improve any further (only oscillates). For this "steady state" region, average of the maximum error in the model is computed and reported.

While in both experiments the training data and the network structure is the same, the addition of the inverse property fields has a great impact on accuracy, reducing the average maximum error from 9% to 1.9%.

### Hardware implementation

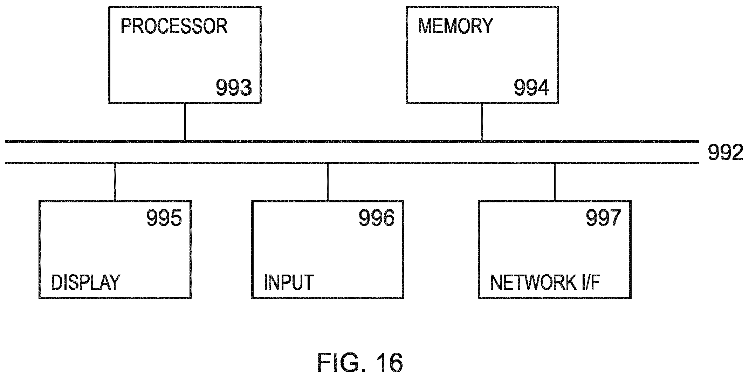

Figure 16 is a block diagram of a computing device, such as or including an accelerator/node/GPU, which embodies the present invention, and which may be used to implement a method of training a CNN. The computing device comprises a processor 993, and memory, 994. Optionally, the computing device also includes a network interface 997 for communication with other computing devices, for example with other computing devices of invention embodiments.

For example, an embodiment may be composed of a network of such computing devices, each including a GPU. Optionally, the computing device also includes one or more input mechanisms such as keyboard and mouse 996, and a display unit such as one or more monitors 995, together with a GUI, for example allowing input of modelling parameters and display of modelling results. Once the CNN is trained, geometry and properties of a product for simulation may be input over the GUI or over the network interface 997The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions described here and in the claims to train a CNN or to generate models of a type of product or to run a numerical simulation. The memory 994 stores data being read and written by the processor 993. As referred to herein, a processor may include a GPU or one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The optional display unit 997 may display a representation of data stored by the computing device and may also display a cursor and dialog boxes and screens enabling interaction between a user and the programs and data stored on the computing device. The optional input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a network/cluster of computing devices such as that illustrated in Figure 16. Such a computing device need not have every component illustrated in Figure 16, and may be composed of a subset of those components. In one example of the method shown in Figure 13, one computing device generates PCB models, but the numerical simulation and Al training are both run on a cluster. A method embodying the present invention may be carried out by a single computing device in communication with one or more data storage servers via a network.

## Claims

1. A computer-implemented method of training a Convolutional Neural Network, CNN, to carry out simulation of a physical product in the form of an electronic or electrical product, wherein the simulation result is a distribution of a parameter across geometry of a simulation volume, the method comprising:
constructing a neural network architecture with an input layer including:
a geometry channel to input geometry of the simulation volume; the geometry divided into one or more solid regions of the product and one or more fluid regions of surrounding fluid; and
a property channel to input a volumetric property of each solid region and each fluid region as a property field; and
training the neural network by inputting training examples in the form of geometry channel inputs, property channel inputs and the resultant outputs of a numerical solver carrying out simulation.

2. A method according to claim 1, further comprising adding to the input layer an inverse property channel for the volumetric property, wherein the inverse property channel inputs a field with the same structure as a structure of the volumetric property but replaces the value v at each location in the structure with its inverse 1/v to form an inverse property field.

3. A method according to claim 1 or 2, wherein a property channel is added for each of a plurality of volumetric properties, preferably including one or more of material properties, properties related to power sources or properties related to external fields, such as one or more of density, specific heat, thermal conductivity or power generation.

4. A method according to claim 3, wherein an inverse property channel is created for one or more of the volumetric properties.

5. A method according to any of the preceding claims, wherein for a volumetric property that is scalable, a property field is calculated for each region by dividing the volumetric property by the volume of the region.

6. A method according to any of the preceding claims, wherein for a volumetric property that is vectorial, individual components are represented as independent volumetric properties.

7. A method according to claim 5, wherein the property field is normalised by dividing all values in the field by the maximum value of the field.

8. A method according to any of the preceding claims, wherein each region is structured into cells and the geometry channel input is converted to a format which represents the spatial relationship between a cell and a boundary of the region in which the cell is included.

9. A method according to any of the preceding claims, wherein the simulation is of heat transfer between a 2D or 3D object that generates heat and a fluid surrounding the object, and the simulation result is an overall heat distribution.

10. A method according to any of the preceding claims, wherein the simulation uses Computational Fluid Dynamics, CFD, or a Conjugate Heat transfer, CHT, simulation.

11. A computer-implemented method of carrying out a simulation of a physical product in a Convolutional Neural Network, CNN, the method comprising:
running the simulation of the physical product in the CNN using a model produced in the CNN by the training method according to any of the preceding claims.

12. A method according to claim 11, wherein the property channel is for input of values for the same parameters as used in the training and the geometry channel is for input of a geometry of the same product type as used in the training.

13. A method according to claim 11 or 12, further comprising:
generating models of a physical product to use in the numerical solver by
inputting parameters for product generation in terms of one or more of: number of components in the product; maximum power of a component; ratio of active to passive components and maximum; and minimum physical component size to vary for each model; and
generating models from the parameters in a format suitable for the numerical solver.

14. A Convolutional Neural Network, CNN, to carry out simulation of a physical product in the form of an electronic or electrical product, wherein the simulation result is a distribution of a parameter across geometry of a simulation volume, the CNN comprising:
a neural network architecture with:
an input layer having a geometry channel for geometry of the simulation volume; the geometry divided into one or more solid regions of the product and one or more fluid regions of surrounding fluid; and a property channel in the input layer to input a volumetric property of each solid region and each fluid region as a property field;
hidden encoding and decoding layers; and
an output layer to output a distribution of a parameter across the geometry of the simulation volume.

15. A computing device comprising memory and computational units arranged to provide a Convolutional Neural Network, CNN, to carry out simulation of a physical product in the form of an electronic or electrical product, wherein the simulation result is a distribution of a parameter across geometry of a simulation volume, wherein
the memory is configured to store weights of layers forming the CNN and data input to the layers; and
the computational units are configured to compute functions applied to the layer weights and input data in the CNN, the CNN comprising:
a neural network architecture with:
an input layer having a geometry channel for geometry of the simulation volume;
the geometry divided into one or more solid regions of the product and one or more fluid regions of surrounding fluid; and a property channel in the input layer to input a volumetric property of each solid region and each fluid region as a property field;
hidden encoding and decoding layers; and
an output layer to output a distribution of a parameter across the geometry of the simulation volume.

## Amended claims

### Amended claims in accordance with Rule 137(2) EPC.

1. A computer-implemented method of training a Convolutional Neural Network, CNN, to carry out simulation of a physical product in the form of an electronic or electrical product, wherein the simulation result is a heat or field distribution across geometry of a simulation volume, the method comprising:
constructing a neural network architecture with an input layer including:
a geometry channel to input geometry of the simulation volume; the geometry divided into one or more solid regions of the product and one or more fluid regions of surrounding fluid; and
a property channel to input a volumetric property of each solid region and each fluid region as a property field; and
training the neural network by inputting training examples in the form of geometry channel inputs, property channel inputs and the resultant outputs of a numerical solver carrying out simulation.

2. A method according to claim 1, further comprising adding to the input layer an inverse property channel for the volumetric property, wherein the inverse property channel inputs a field with the same structure as a structure of the volumetric property but replaces the value v at each location in the structure with its inverse 1/v to form an inverse property field.

3. A method according to claim 1 or 2, wherein a property channel is added for each of a plurality of volumetric properties, preferably including one or more of material properties, properties related to power sources or properties related to external fields, such as one or more of density, specific heat, thermal conductivity or power generation.

4. A method according to claim 3, wherein an inverse property channel is created for one or more of the volumetric properties.

5. A method according to any of the preceding claims, wherein for a volumetric property that is scalable, a property field is calculated for each region by dividing the volumetric property by the volume of the region.

6. A method according to any of the preceding claims, wherein for a volumetric property that is vectorial, individual components are represented as independent volumetric properties.

7. A method according to claim 5, wherein the property field is normalised by dividing all values in the field by the maximum value of the field.

8. A method according to any of the preceding claims, wherein each region is structured into cells and the geometry channel input is converted to a format of a fixed size for input, which represents the spatial relationship between a cell and a boundary of the region in which the cell is included.

9. A method according to any of the preceding claims, wherein the simulation is of heat transfer between a 2D or 3D object that generates heat and a fluid surrounding the object, and the simulation result is an overall heat distribution.

10. A method according to any of the preceding claims, wherein the simulation uses Computational Fluid Dynamics, CFD, or a Conjugate Heat transfer, CHT, simulation.

11. A computer-implemented method of carrying out a simulation of a physical product in a Convolutional Neural Network, CNN, the method comprising:
carrying out the training method according to any of the preceding claims and then running the simulation of the physical product in the CNN using a model produced in the CNN by the training method.

12. A method according to claim 11, wherein the property channel is for input of values for the same parameters as used in the training and the geometry channel is for input of a geometry of the same product type as used in the training.

13. A method according to claim 11 or 12, further comprising:
generating models of a physical product to use in the numerical solver by
inputting parameters for product generation in terms of one or more of: number of components in the product; maximum power of a component; ratio of active to passive components and maximum; and minimum physical component size to vary for each model; and
generating models from the parameters in a format suitable for the numerical solver.

14. A Convolutional Neural Network, CNN, to carry out simulation of a physical product in the form of an electronic or electrical product, wherein the simulation result is a heat or field distribution across geometry of a simulation volume, the CNN comprising:
a neural network architecture with:
an input layer having a geometry channel for geometry of the simulation volume; the geometry divided into one or more solid regions of the product and one or more fluid regions of surrounding fluid; and a property channel in the input layer to input a volumetric property of each solid region and each fluid region as a property field;
hidden encoding and decoding layers; and
an output layer to output a distribution of a parameter across the geometry of the simulation volume.

15. A computing device comprising memory and computational units arranged to provide a Convolutional Neural Network, CNN, to carry out simulation of a physical product in the form of an electronic or electrical product, wherein the simulation result is a heat or field distribution across geometry of a simulation volume, wherein
the memory is configured to store weights of layers forming the CNN and data input to the layers; and
the computational units are configured to compute functions applied to the layer weights and input data in the CNN, the CNN comprising:
a neural network architecture with:
an input layer having a geometry channel for geometry of the simulation volume; the geometry divided into one or more solid regions of the product and one or more fluid regions of surrounding fluid; and a property channel in the input layer to input a volumetric property of each solid region and each fluid region as a property field; hidden encoding and decoding layers; and
an output layer to output a distribution of a parameter across the geometry of the simulation volume.
